(19) **Europäisches Patentamt / European Patent Office / Office européen des brevets**

(11) **EP 4 704 477 A1**

(12) **EUROPEAN PATENT APPLICATION**
published in accordance with Art. 153(4) EPC

(43) Date of publication:
**04.03.2026 Bulletin 2026/10**

(21) Application number: **24795958.8**

(22) Date of filing: **19.04.2024**

(51) International Patent Classification (IPC):
**H04W 72/04** (2023.01) **H04L 1/00** (2006.01)

(52) Cooperative Patent Classification (CPC):
**H04L 1/00; H04W 72/04**

(86) International application number:
**PCT/CN2024/088746**

(87) International publication number:
**WO 2024/222577 (31.10.2024 Gazette 2024/44)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **24.04.2023 CN 202310455140**

(71) Applicant: **Vivo Mobile Communication Co., Ltd.**
**Dongguan, Guangdong 523863 (CN)**

(72) Inventors:
• **REN, Qianyao**
  **Dongguan, Guangdong 523863 (CN)**
• **WU, Hao**
  **Dongguan, Guangdong 523863 (CN)**

(74) Representative: **Lavoix**
**Bayerstraße 83**
**80335 München (DE)**

(54) **INFORMATION PROCESSING METHOD AND APPARATUS, INFORMATION TRANSMISSION METHOD AND APPARATUS, AND TERMINAL AND NETWORK-SIDE DEVICE**

(57) This application discloses an information processing method, an information transmission method, an apparatus, a terminal, and a network-side device, and belongs to the field of communication technologies. The information processing method in embodiments of this application includes: The terminal obtains first information, where the first information indicates payload information of first channel characteristic information corresponding to at least one layer; and the terminal performs, based on the first information, first processing on channel information of a target layer by using a target first AI unit, to obtain the first channel characteristic information corresponding to the target layer, where the payload information of the first channel characteristic information corresponding to the target layer matches an output length of the target first AI unit, and the at least one layer includes the target layer.

FIG. 4

A terminal obtains first information, where the first information indicates payload information of first channel characteristic information corresponding to at least one layer (layer) — 401

The terminal performs, based on the first information, first processing on channel information of a target layer (layer) by using a target first AI unit, to obtain the first channel characteristic information corresponding to the target layer (layer), where payload information of the first channel characteristic information corresponding to the target layer (layer) matches an output length of the target first AI unit — 402

# Description

## CROSS-REFERENCE TO RELATED APPLICATIONS

This application claims priority to Chinese Patent Application No. 202310455140.7, filed in China on April 24, 2023, which is incorporated by reference in its entirety.

## TECHNICAL FIELD

This application belongs to the field of communication technologies, and specifically, to an information processing method, an information transmission method, an apparatus, a terminal, and a network-side device

## BACKGROUND

In a related technology, a terminal may compress channel information by using an encoding artificial intelligence (AI) model, and report compressed channel characteristic information. A network side may recover, by using a decoding AI model, the channel characteristic information reported by the terminal, to obtain the channel information of the terminal. In this way, overheads of reporting the channel information by the terminal can be reduced.

In a high-rank (rank) scenario, after estimating a channel state information-reference signal (Channel State Information-Reference Signal, CSI-RS), the terminal performs singular value decomposition (Singular Value Decomposition, SVD) on a channel matrix, to obtain precoding matrices of a plurality of relatively orthogonal layers (layer). A precoding matrix of each layer may be independently compressed by using an encoding AI model, to obtain a result, and then compression results of all layers are reported to a base station together.

However, lengths of compression results obtained after precoding matrices of different layers are compressed by using a same coding AI model are the same. Consequently, accuracy of compression results of some important layers is insufficient or lengths of compression results of some unimportant layers are excessively long.

## SUMMARY

Embodiments of this application provide an information processing method, an information transmission method, an apparatus, a terminal, and a network-side device. The terminal may adjust an encoding AI model or an output length of an encoding AI model corresponding to each layer based on first information, to more flexibly adjust lengths of compression results of different layers.

According to a first aspect, an information processing method is provided. The method includes:

A terminal obtains first information, where the first information indicates payload information of first channel characteristic information corresponding to at least one layer; and

the terminal performs, based on the first information, first processing on channel information of a target layer by using a target first AI unit, to obtain the first channel characteristic information corresponding to the target layer, where the payload information of the first channel characteristic information corresponding to the target layer matches an output length of the target first AI unit, and the at least one layer includes the target layer.

According to a second aspect, an information processing method is provided. The method includes:

A network-side device sends first information to a terminal, where the first information indicates payload information of first channel characteristic information corresponding to at least one layer.

The first information is used by the terminal to determine a payload of first channel characteristic information corresponding to a target layer, the first channel characteristic information corresponding to the target layer is obtained by performing first processing by a target first AI unit corresponding to the target layer on channel information of the target layer, payload information of the first channel characteristic information corresponding to the target layer matches an output length of the target first AI unit, and the at least one layer includes the target layer.

According to a third aspect, an information processing apparatus is provided, including:

a first obtaining module, configured to obtain first information, where the first information indicates payload information of first channel characteristic information corresponding to at least one layer; and

a first processing module, configured to perform, based on the first information, first processing on channel information of a target layer by using a target first AI unit, to obtain the first channel characteristic information corresponding to the target layer, where the payload information of the first channel characteristic information corresponding to the target layer matches an output length of the target first AI unit, and the at least one layer includes the target layer.

According to a fourth aspect, an information processing apparatus is provided, including:

a first sending module, configured to send first information to a terminal, where the first information indicates payload information of first channel characteristic information corresponding to at least one layer.

The first information is used by the terminal to determine a payload of first channel characteristic information corresponding to a target layer, the first channel characteristic information corresponding to the target layer is obtained by performing first processing by a target first AI unit corresponding to the target layer on channel information of the target layer, payload information of the first channel characteristic information corresponding to the target layer matches an output length of the target first AI unit, and the at least one layer includes the target layer.

According to a fifth aspect, a terminal is provided. The terminal includes a processor and a memory. The memory stores a program or instructions runnable on the processor. When the program or the instructions are executed by the processor, the steps of the method according to the first aspect are implemented.

According to a sixth aspect, a terminal is provided, including a processor and a communication interface. The communication interface is configured to obtain first information, where the first information indicates payload information of first channel characteristic information corresponding to at least one layer. The processor is configured to perform, based on the first information, first processing on channel information of a target layer by using a target first AI unit, to obtain the first channel characteristic information corresponding to the target layer, where the payload information of the first channel characteristic information corresponding to the target layer matches an output length of the target first AI unit, and the at least one layer includes the target layer.

According to a seventh aspect, a network-side device is provided. The network-side device includes a processor and a memory. The memory stores a program or instructions runnable on the processor. When the program or the instructions are executed by the processor, the steps of the method according to the second aspect are implemented.

According to an eighth aspect, a network-side device is provided, including a processor and a communication interface. The communication interface is configured to send first information to a terminal, where the first information indicates payload information of first channel characteristic information corresponding to at least one layer, the first information is used by the terminal to determine a payload of first channel characteristic information corresponding to a target layer, the first channel characteristic information corresponding to the target layer is obtained by performing first processing by a target first AI unit corresponding to the target layer on channel information of the target layer, payload information of the first channel characteristic information corresponding to the target layer matches an output length of the target first AI unit, and the at least one layer includes the target layer.

According to a ninth aspect, a readable storage medium is provided. The readable storage medium stores a program or instructions. When the program or the instructions are executed by the processor, the steps of the method according to the first aspect or the steps of the method according to the second aspect are implemented.

According to a tenth aspect, a communication system is provided, including a terminal and a network-side device. The terminal may be configured to perform the steps of the method according to the first aspect, and the network-side device may be configured to perform the steps of the method according to the second aspect.

According to an eleventh aspect, a chip is provided. The chip includes a processor and a communication interface. The communication interface is coupled to the processor. The processor is configured to execute a program or instructions, to implement the method according to the first aspect or implement the method according to the second aspect.

According to a twelfth aspect, a computer program/program product is provided. The computer program/program product is stored in a storage medium. The computer program/program product is executed by at least one processor, to implement the steps of the information processing method according to the first aspect or the steps of the information processing method according to the second aspect.

In this embodiment of this application, the terminal may determine, based on the first information, the payload information of the first channel characteristic information corresponding to each layer, to process channel information of one layer by using the first AI unit matching the payload information, so as to obtain the channel characteristic information matching the payload information. In this way, for different layers, the terminal may report channel characteristic information of different payloads to the network-side device, so that lengths of channel characteristic information of different layers can be adjusted more flexibly, and while overheads of reporting the channel characteristic information is reduced, accuracy of channel characteristic information of a layer with higher importance can further be improved pointedly. For example, it is indicated by using the first information that a payload of channel characteristic information of a layer with higher importance, higher strength, or higher concentration is greater than a payload of channel characteristic information of a layer with lower importance, lower strength, or lower concentration, so that the channel characteristic information, reported by the terminal, of the layer with higher importance or higher strength or higher concentration is more accurate than the channel characteristic information, reported by the terminal, of the layer with lower importance or lower strength or lower concentration.

**BRIEF DESCRIPTION OF DRAWINGS**

FIG. 1 is a schematic diagram of a structure of a wireless communication system to which an embodiment of this application may be applied;
FIG. 2 is a schematic diagram of an architecture of a neural network model;

FIG. 3 is a schematic diagram of a neuron;

FIG. 4 is a schematic flowchart of an information processing method according to an embodiment of this application;

FIG. 5 is a schematic flowchart of another information processing method according to an embodiment of this application;

FIG. 6 is a schematic diagram of a structure of an information processing apparatus according to an embodiment of this application;

FIG. 7 is a schematic diagram of a structure of another information processing apparatus according to an embodiment of this application;

FIG. 8 is a schematic diagram of a structure of a communication device according to an embodiment of this application;

FIG. 9 is a schematic diagram of a structure of a terminal according to an embodiment of this application; and

FIG. 10 is a schematic diagram of a structure of a network-side device according to an embodiment of this application.

## DESCRIPTION OF EMBODIMENTS

The following describes the technical solutions in embodiments of this application with reference to the accompanying drawings in embodiments of this application. It is clear that the described embodiments are a part rather than all of embodiments of this application. All other embodiments obtained by a person of ordinary skill in the art based on embodiments of this application fall within the protection scope of this application.

In this application, the terms "first" and "second" are used to distinguish similar objects, but are not used to describe a specific sequence or order. It should be understood that the terms used in this way may be transposed where appropriate, so that embodiments of this application may be implemented in a sequence other than those illustrated or described herein. In addition, objects defined by "first" and "second" are generally of the same class and do not limit a quantity of objects. For example, one or more first objects may be arranged. In addition, "or" in this application indicates at least one of connected objects. For example, "A or B" covers three solutions, that is, Solution 1: including A and excluding B; Solution 2: including B and excluding A; and Solution 3: including both A and B. The character "/" in this specification generally indicates an "or" relationship between the associated objects.

In this application, the term "indication" may be a direct indication (or an explicit indication) or an indirect indication (or an implied indication). The direct indication may be understood as that a sending party clearly informs a receiving party of content such as specific information, a to-be-performed operation, or a request result in a sent indication. The indirect indication may be understood as that the receiving party determines corresponding information based on the indication sent by the sending party, or makes a judgment and determines the to-be-performed operation, the request result, or the like based on the judgment result.

It should be noted that, the technology described in embodiments of this application may be applied to a long term evolution (Long Term Evolution, LTE)/LTE-advanced (LTE-Advanced, LTE-A) system, and may be further applied to another wireless communication system like a code division multiple access (Code Division Multiple Access, CDMA) system, a time division multiple access (Time Division Multiple Access, TDMA) system, a frequency division multiple access (Frequency Division Multiple Access, FDMA) system, an orthogonal frequency division multiple access (Orthogonal Frequency Division Multiple Access, OFDMA) system, a single-carrier frequency division multiple access (Single-carrier Frequency Division Multiple Access, SC-FDMA) system, or another system. The terms "system" and "network" in embodiments of this application are usually interchangeably used, and the described technology may be applied to both the system and the wireless technology mentioned above, or may be applied to another system and wireless technology. A new radio (New Radio, NR) system is described below as an example, and the term NR is used in most of the following descriptions. Nevertheless, the technologies may also be applied to a system other than the NR system, for example, a 6th Generation (6th Generation, 6G) communication system.

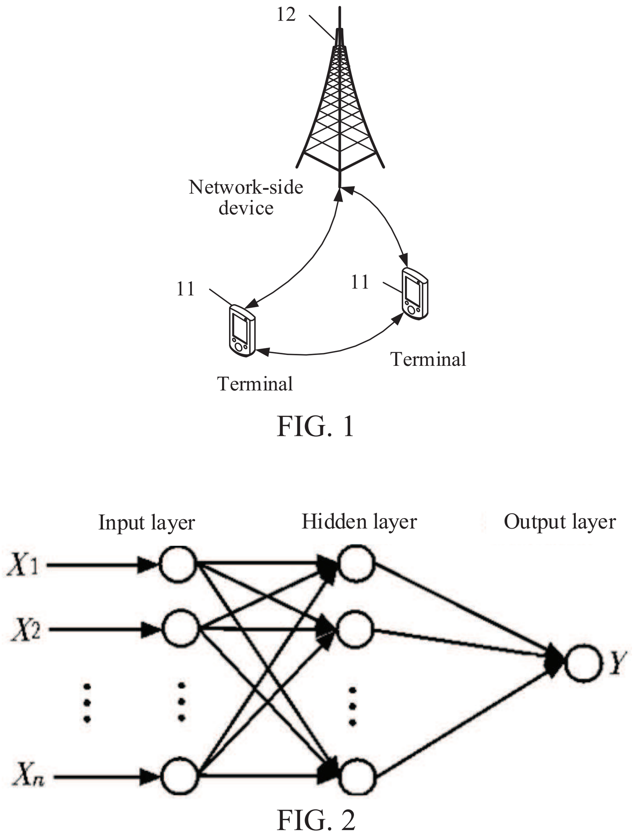

FIG. 1 is a block diagram of a wireless communication system to which an embodiment of this application may be applied. The wireless communication system includes terminals 11 and a network-side device 12. The terminal 11 may be a terminal side device like a mobile phone, a tablet personal computer (Tablet Personal Computer), a laptop computer (Laptop Computer), a notebook computer, a personal digital assistant (Personal Digital Assistant, PDA), a palmtop computer, a netbook, an ultra-mobile personal computer (Ultra-Mobile Personal Computer, UMPC), a mobile internet device (Mobile Internet Device, MID), an augmented reality (Augmented Reality, AR) device, a virtual reality (Virtual Reality, VR) device, a robot, a wearable device (Wearable Device), a flight vehicle (flight vehicle), a vehicle-mounted device (Vehicle User Equipment, VUE), a ship-borne equipment, a pedestrian user equipment (Pedestrian User Equipment, PUE), a smart home appliance (a home device with a wireless communication capability, for example, a refrigerator, a television, a washing machine, or furniture), a game console, a personal computer (Personal Computer, PC), a teller machine, or a self-service machine. The wearable device includes a smart watch, a smart band, a smart headset, smart glasses, smart jewelry (a smart bracelet, a smart chain bracelet, a smart ring, a smart necklace, a smart ankle bangle, a smart ankle chain, and the like), a smart wristband, smart clothing, and the like. The vehicle-mounted device may also be referred to as a vehicle-mounted terminal, a vehicle-mounted controller, a vehicle-mounted module, a vehicle-mounted component, a vehicle-mounted chip, a vehicle-mounted unit, or the like. It should be noted that a specific type of the terminal 11 is not limited in embodiments of this application. The network-side device 12 may include an access network device or a core network device. The access network device may also be referred to as a radio access network (Radio Access Network, RAN), a wireless access network function, or a wireless access network unit. The access network device may include a base station, a wireless local area network (Wireless Local Area Network, WLAN), an access point (Access Point, AP), a wireless fidelity (Wireless-Fidelity, Wi-Fi) node, or the like. The base station may be referred to as a node B (Node B, NB), an evolved node B (evolved Node B, eNB), the next generation Node B (the next generation Node B, gNB), a new radio node B (New Radio Node B, NR Node B), an access point, a relay base station (Relay Base Station, RBS), a serving base station (Serving Base Station, SBS), a base transceiver station (Base Transceiver Station, BTS), a radio base station, a radio transceiver, a basic service set (Basic Service Set, BSS), an extended service set (Extended Service Set, ESS), a home node B (home Node B, HNB), a home evolved node B (home evolved Node B), a transmission receiving point (Transmission Receiving Point, TRP) or some other suitable terms in the field as long as the same technical effect is achieved, and the base station is not limited to a specific technical word. It should be noted that in embodiments of this application, introduction is made only taking the base station in the NR system as an example, and the specific type of the base station is not limited.

In the wireless communication technology, accurate channel state information (channel state information, CSI) is crucial to a channel capacity. Especially for a multi-antenna system, a transmit end can optimize signal transmission based on the CSI for a better match with a state of a channel. For example, a channel quality indicator (Channel Quality Indicator, CQI) can be used for selecting an appropriate modulation and coding scheme (Modulation and Coding Scheme, MCS) to implement link adaptation. A precoding matrix indicator (Precoding Matrix Indicator, PMI) can be used for implementing eigen beamforming (eigen beamforming) to maximize strength of a received signal, or suppress interference (for example, interference between cells or interference between a plurality of users). Thus, CSI obtaining has always been a research hotspot since a multi-antenna technology (for example a multiple-input multiple-output (multi-input multi-output, MIMO)) is proposed.

Generally, the network-side device sends a CSI reference signal (CSI reference signal, CSI-RS) on some time-frequency resources of a slot (slot). The terminal performs channel estimation based on the CSI-RS, calculates channel information on this slot, and feeds back a PMI to the base station through a codebook. The network-side device obtains the channel information through combination based on codebook information fed back by the terminal. Before the terminal reports CSI next time, the network-side device performs data precoding and multi-user scheduling based on the channel information.

To further reduce CSI feedback overheads, the terminal can change PMI reporting on each sub-band to PMI reporting based on a delay (a delay domain, namely, frequency domain). Since channels in the delay domain are more concentrated, PMIs on all sub-bands can be approximately represented by PMIs with fewer delays. In other words, delay-domain information is compressed before reported.

Similarly, to reduce overheads, the network-side device can precode the CSI-RS, and transmit an encoded CSI-RS to the terminal. The terminal learns of a channel corresponding to the encoded CSI-RS. The terminal only needs to select several ports having high strength from ports indicated by the network-side device, and report coefficients corresponding to the ports.

In a related technology, channel information is compressed through an AI unit, so that a compression effect of channel characteristic information can be improved. Specifically, the terminal may estimate a CSI reference signal (CSI Reference Signal, CSI-RS) or a tracking reference signal (Tracking Reference Signal, TRS), perform calculation based on channel information obtained through estimation, to obtain calculated channel information, then encode, through an encoder, the calculated channel information or the original channel information obtained through estimation, to obtain an encoding result, and finally send the encoding result to the base station. On a base station side, after receiving the encoding result, the base station may input the encoding result to a decoder, and recover the channel information through the decoder. Specifically, a CSI compression feedback solution based on the neural network is as follows: The terminal compresses and encodes the channel information through an encoding network, and transmits a compressed content to the base station. The base station decodes the compressed content through a decoding network, to recover the channel information. In this case, the decoding network of the base station and the encoding network of the terminal need to be jointly trained to achieve a proper match degree. The channel information serves as an input of the encoding network, and encoded information, namely, channel characteristic information serves as an output thereof. The encoded information serves as an input of the decoding network, and the channel information recovered serves as an output thereof.

After estimating the CSI-RS, the terminal performs singular value decomposition (Singular Value Decomposition, SVD) on a channel matrix, to obtain precoding matrices of a plurality of relatively orthogonal layers (layer). When feeding back the CSI, the terminal needs to feed back a corresponding rank indicator (Rank Indicator, RI) and a corresponding PMI. The RI indicates a total quantity of selected layers, and the PMI is a precoding matrix corresponding to the layer. In an AI-based CSI feedback, compressed channel characteristic information may be obtained by independently using a first AI unit for a precoding matrix of each layer, and then channel characteristic information of all layers is reported to the base station together.

In this embodiment of this application, in a high-rank (rank) scenario, on a basis that different layers have different energy concentrations, channel characteristic information with a larger payload may be used for a relatively important layer. In this way, a longer payload of channel characteristic information indicates more accurate channel information recovered by the network-side device based on the channel characteristic information. In this way, reporting channel characteristic information with a larger payload to a relatively important layer improves accuracy of recovering channel information of the relatively important layer by the network-side device. Reporting channel characteristic information with a smaller payload to a relatively unimportant layer reduces overheads for reporting the channel characteristic information.

It should be noted that an AI unit in this embodiment of this application may also be referred to as an AI model, an AI structure, or the like, or the AI unit may alternatively be a processing unit that can implement a specific algorithm, formula, processing procedure, capability, or the like related to AI, or the AI unit may be a processing method, an algorithm, a function, a module, or a unit for a specific data set, or the AI unit may be a processing method, an algorithm, a function, a module, or a unit that runs on AI-related hardware like a graphics processing unit (Graphics Processing Unit, GPU), a neural-network processing unit (Neural-Network Processing Unit, NPU), a tensor processing unit (Tensor Processing Unit, TPU), or an application-specific integrated circuit (Application-Specific Integrated Circuit, ASIC). This is not specifically limited in this application. Optionally, the specific data set includes an input or an output of the AI unit.

Optionally, an identifier of the AI unit may be an AI model identifier, an AI structure identifier, an AI algorithm identifier, or an identifier of a specific data set associated with the AI unit, or an identifier of a specific scenario, environment, channel characteristic, or device related to the AI, or an identifier of a function, a characteristic, a capability, or a module related to the AI. This is not specifically limited in this application.

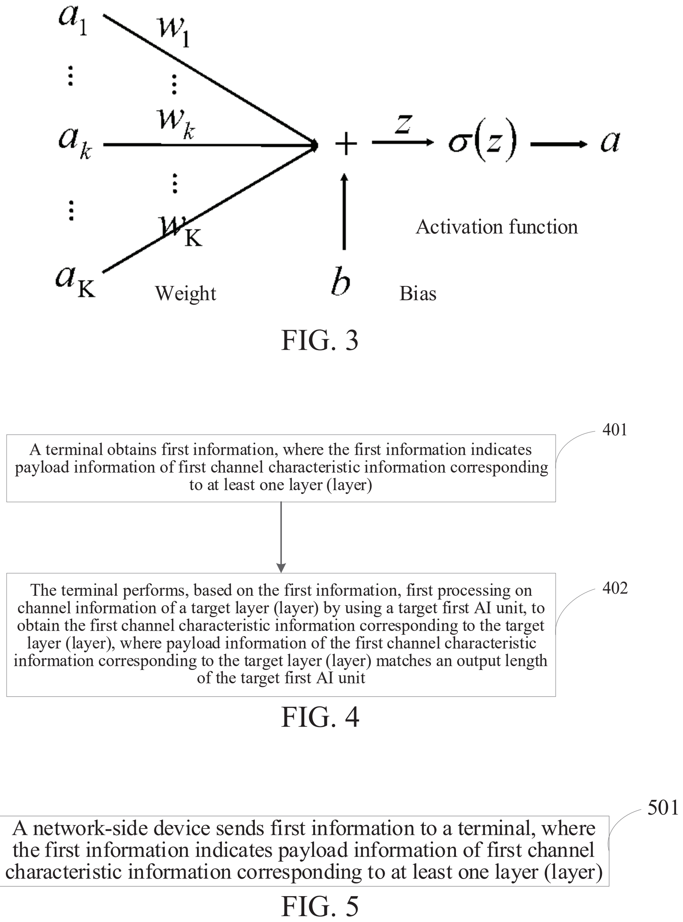

In addition, there are various implementations for AI functions, for example, a neural network, a decision-making tree, a support vector machine, and a Bayesian classifier. This is not specifically limited in this application. For ease of description, in this embodiment of this application, an example in which the AI unit is a neural network is used for description, but a specific type of the AI unit is not limited. For example, as shown in FIG. 2, a neural network model includes an input layer, a hidden layer, and an output layer, and can predict a possible output result (Y) based on access information (X1 to Xn) obtained by the input layer. The neural network model includes a large quantity of neurons. As shown in FIG. 3, parameters of the neurons include: input parameters a1 to aK, weights w, a bias b, an activation function σ (z), and an output value a obtained based on these parameters. Common activation functions include an S-type growth curve (Sigmoid) function, a hyperbolic tangent (tanh) function, a rectified linear unit (Rectified Linear Unit, ReLU, also referred to as a linear rectification function) function, and the like, and z in the function σ (z) may be calculated by using the following formula:

$$z = a_1 w_1 + \cdots a_k w_k + a_K w_K + b$$

Herein, *K* represents a total quantity of input parameters.

Parameters of a neural network are optimized through an optimization algorithm. The optimization algorithm is a type of algorithm that is conducive to minimization or maximization of an objective function (sometimes referred to as a loss function). The objective function is usually a mathematical combination of a model parameter and data. For example, assuming that data x and a label Y corresponding to the data are given, one neural network model f(.) is constructed. With the neural network model, a predicted output f(x) can be obtained based on an input x, and a difference (f(x)-Y) between a predicted value and a real value can be calculated, which is a loss function. To find an appropriate w and b, a value of the above loss function reaches a minimum. A smaller loss value indicates that the model is closer to a real situation.

Currently, common optimization algorithms are basically based on an error back propagation (error Back Propagation, BP) algorithm. A basic idea of the BP algorithm is that a learning process includes two processes: signal forward propagation and error back propagation. During the forward propagation, an input sample is transmitted from an input layer, processed layer by layer by each hidden layer, and then transmitted to an output layer. If an actual output of the output layer does not match an expected output, an error back propagation stage is performed. The error back propagation is to propagate an output error layer by layer back to the input layer through the hidden layers in a particular form, and assign the error to all units of each layer, so as to obtain an error signal of the units of each layer. The error signal is used as a basis for correcting a weight of each unit. Such a weight adjustment process at each layer of signal forward propagation and error back propagation is performed cyclically. The process of continuously adjusting the weight is a learning training process of a network. This process continues until an error outputted by the network is reduced to an acceptable degree or a preset quantity of times of learning is performed.

The common optimization algorithms include gradient descent (Gradient Descent), stochastic gradient descent (Stochastic Gradient Descent, SGD), mini-batch gradient descent (mini-batch gradient descent), momentum (Momentum), stochastic gradient descent with momentum (Nesterov), adaptive gradient descent (Adaptive gradient descent, Adagrad), adaptive learning rate adjustment (Adadelta), root mean square prop (root mean square prop, RMSprop), adaptive moment estimation (Adaptive Moment Estimation, Adam), and the like.

During error back propagation, in these optimization algorithms, an error/loss is obtained according to the loss function, a gradient is obtained by calculating a derivative/partial derivative of a current neuron, and adding an effect such as a learning rate and a previous gradient/derivative/partial derivative, and the gradient is transferred to an upper layer.

The AI unit in embodiments of this application includes:

a first AI unit, namely, an AI unit corresponding to an encoder, deployed on a terminal side, where input information of the first AI unit is channel information, and output information of the first AI unit is channel characteristic information; and
a second AI unit, namely, an AI unit corresponding to a decoder, deployed on a network side, where input information of the second AI unit is channel characteristic information, and output information of the second AI unit is recovered channel information.

An information processing method, an information processing apparatus, and a related device provided in embodiments of this application are described in detail below by using some embodiments and application scenarios thereof with reference to the accompanying drawings.

Refer to FIG. 4. An embodiment of this application provides an information processing method. An execution body of the information processing method may be a terminal. The terminal may be various types of terminals 11 listed in FIG. 1, or another terminal other than the terminal types listed in the embodiment shown in FIG. 1. This is not specifically limited herein.

As shown in FIG. 4, the information processing method may include the following steps:

Step 401: The terminal obtains first information, where the first information indicates payload information of first channel characteristic information corresponding to at least one layer.

In a implementation, the first information may be configured or indicated by a network-side device.

In another implementation, the first information may be agreed on by a protocol.

In still another implementation, one part of the first information may be configured or indicated by a network-side device, and the other part may be agreed on by a protocol.

Step 402: The terminal performs, based on the first information, first processing on channel information of a target layer by using a target first AI unit, to obtain the first channel characteristic information corresponding to the target layer, where the payload information of the first channel characteristic information corresponding to the target layer matches an output length of the target first AI unit, and the at least one layer includes the target layer.

In this embodiment of this application, the channel information of the target layer may be a precoding matrix of one layer. For example, the terminal measures or estimates a CSI-RS, to obtain a channel matrix, and performs SVD decomposition on the channel matrix, to obtain a precoding matrix of at least one relatively orthogonal layer.

Optionally, the target layer may be each of the at least one relatively orthogonal layer, and a payload of first channel characteristic information corresponding to each layer may be determined based on the first information.

In view of that the first channel characteristic information is output information of a first AI unit, in this case, the payload of the first channel characteristic information matches an output length of the first AI unit. In other words, the terminal may have at least two first AI units, and output lengths of different first AI units may be different. In this case, the terminal may first determine a payload of the first channel characteristic information of the target layer based on the first information, and then obtain the target first AI unit that can output output information matching the payload. In this way, the target first AI unit may be associated with the target layer, and the target first AI unit may be used to perform the first processing on the channel information of the associated target layer.

In an implementation, that the payload information of the first channel characteristic information corresponding to the target layer matches the output length of the target first AI unit may be that the payload of the first channel characteristic information corresponding to the target layer is equal to or approximately equal to the output length of the target first AI unit.

Optionally, the first processing may include at least one of the following processing: compression, encoding, quantization, normalization, and the like.

In an implementation, when the first processing includes quantization processing, the output length of the first AI unit may be a quantity of bits (bit). In this case, the payload may alternatively be a quantity of bits.

In another implementation, when the first processing does not include quantization processing, the output length of the first AI unit may be a quantity of floating-point numbers. In this case, the payload may alternatively be a quantity of floating-point numbers.

Optionally, when the first processing does not include quantization processing, the network-side device may indicate or preconfigure a quantization method, and the terminal quantizes, based on the quantization method indicated or preconfigured by the network-side device, the first channel characteristic information output by the first AI unit, and sends the quantized first channel characteristic information to the network-side device.

As an optional implementation, the first information includes at least one of the following:

the payload information in a one-to-one correspondence with the at least one layer;
total payload information in a one-to-one correspondence with candidate ranks;
total payload information, where the total payload information is a sum of payloads of the first channel characteristic information corresponding to the at least one layer;
a first relationship, where the first relationship includes a relationship between a payload of a first layer and a payload of a second layer, and the at least one layer includes the first layer and the second layer; and
preset maximum total payload information corresponding to a preset maximum rank.

In an implementation, the first information includes the payload information in a one-to-one correspondence with the at least one layer. For example, the first information indicates a respective payload length corresponding to each layer, or the first information indicates a respective first AI unit corresponding to each layer. In this way, for the target layer, the terminal may use, as the target first AI unit, the first AI unit corresponding to the target layer or a first AI unit whose output information length matches a corresponding payload length.

In another implementation, the total payload information is in a one-to-one correspondence with the candidate ranks. The candidate rank may be a range of ranks that the terminal may select and that is configured by the network-side device. The terminal may select one from the candidate ranks as an actual target rank, that is, select an actual quantity of layers. For example, for rank=1, corresponding total payload information is 100 bits. For rank=2, corresponding total payload information is 200 bits. For rank=3, corresponding total payload information is 300 bits. For rank=4, corresponding total payload information is 400 bits. If the terminal selects the target rank as 2, the terminal determines that a total amount of payloads of first channel characteristic information corresponding to two layers is 200 bits.

Optionally, after the total payload information of the first channel characteristic information corresponding to the at least one layer is determined, the payload information of the first channel characteristic information corresponding to each layer may be determined according to a preset rule. For example, it is determined that payloads of the first channel characteristic information corresponding to the at least one layer are equal, that is, first channel characteristic information corresponding to at least two layers evenly divide a total amount of payloads. Alternatively, the payload information of the first channel characteristic information corresponding to each layer is determined according to a preset rule, for example, the first relationship, indicated by the network-side device or agreed on by a protocol.

The first relationship may include a payload relationship between layers. For example, a payload of first channel characteristic information corresponding to a second layer is 60% of a payload of first channel characteristic information corresponding to the first layer. Alternatively, the first relationship may include an allocation rule of the payload information between the layers. For example, it is assumed that rank=4, and the determined total payload information is 500 bits, the first relationship is [0.3 0.3 0.2 0.2], that is, payloads of first channel characteristic information corresponding to a layer 0 and a layer 1 each account for 0.3 of the total amount of payloads, namely, 150 bits, and payloads of first channel characteristic information corresponding to a layer 2 and a layer 3 each account for 0.2 of the total amount of payloads, namely, 100 bits.

In still another implementation, the first information may directly indicate a sum of the payloads of the first channel characteristic information corresponding to the at least one layer. Optionally, after obtaining the sum of the payloads of the first channel characteristic information corresponding to the at least one layer, the terminal may determine, based on a manner similar to that in the previous implementation, the payload information of the first channel characteristic information corresponding to each layer.

In still another implementation, the first information may indicate preset maximum total payload information corresponding to the preset maximum rank. The preset maximum rank may be understood as a maximum value of ranks that can be selected by the terminal. For example, assuming that the preset maximum rank is 4, the ranks that can be selected by the terminal is 1, 2, 3, or 4. In this case, the terminal may determine, based on the selected target rank, the total payload information of the first channel characteristic information corresponding to the at least one layer. For example, if the terminal determines that the target rank is less than the preset maximum rank, the terminal may determine that the total payload information of the first channel characteristic information corresponding to the at least one layer is all or a part of the preset maximum total payload information. Optionally, after obtaining the sum of the payloads of the first channel characteristic information corresponding to the at least one layer, the terminal may determine, based on a manner similar to that in the previous implementation, the payload information of the first channel characteristic information corresponding to each layer.

It should be noted that, after the total payload information of the first channel characteristic information corresponding to the at least one layer is determined, the payload information of the first channel characteristic information corresponding to each layer may be determined according to a preset rule. For example, it is determined that payloads of the first channel characteristic information corresponding to the at least one layer are equal, that is, first channel characteristic information corresponding to at least two layers evenly divide a total amount of payloads.

Alternatively,

after the total payload information of the first channel characteristic information corresponding to the at least one layer is determined, the payload information of the first channel characteristic information corresponding to each layer may be determined according to a rule agreed on by the network-side device or a protocol. For example, the payload information of the first channel characteristic information corresponding to each layer is determined based on the first relationship.

Optionally, when the first information includes the first relationship and the total payload information, the method further includes:

The terminal determines payloads in a one-to-one correspondence with the at least one layer based on the first relationship and the total payload information.

In this implementation, the first relationship includes the relationship between the payload of the first layer and the payload of the second layer, and the at least one layer includes the first layer and the second layer. For example, at least two layers are ranked in descending order of importance, and the first relationship indicates that the payload of the first channel characteristic information corresponding to the first layer is 20% greater than the payload of the first channel characteristic information corresponding to the second layer, the payload of the first channel characteristic information corresponding to the second layer is 10% greater than a payload of first channel characteristic information corresponding to a third layer, and the like.

In another implementation, when the first information includes the first relationship and total payload information that is in a one-to-one correspondence with the candidate ranks, the method further includes:

The terminal determines, based on the total payload information in a one-to-one correspondence with the candidate ranks, target total payload information corresponding to a target rank, where the target rank is a rank of a target channel corresponding to the at least one layer; and

the terminal determines payloads in a one-to-one correspondence with the at least one layer based on the first relationship and the target total payload information.

The process of determining, by the terminal based on the first relationship and the target total payload information, the payloads in a one-to-one correspondence with the at least one layer is the same as or similar to the process of determining, by the terminal based on the first relationship and the target total payload information, the payloads in a one-to-one correspondence with the at least one layer in the previous implementation. Details are not described herein again.

In still another implementation, when the first information includes the first relationship and preset maximum total payload information corresponding to the preset maximum rank, the method further includes:

The terminal determines that a sum of the payloads of the at least one layer is equal to the preset maximum total payload information or is equal to a product of the preset maximum total payload information and a first value, where the first value is a ratio of a target rank to the preset maximum rank, and the target rank is a rank of a target channel corresponding to the at least one layer; and

the terminal determines the payloads in a one-to-one correspondence with the at least one layer based on the first relationship and the sum of the payloads of the at least one layer.

Optionally, when the terminal determines that the sum of the payloads of the at least one layer is equal to the preset maximum total payload information, the terminal may equally expand the first channel characteristic information corresponding to the at least one layer, for example, expand the first channel characteristic information to X/Y times, where X indicates the preset maximum rank, and Y indicates the target rank. During implementation, the terminal further sends the target rank or an identifier of the target rank to the network side, to assist the network-side device in determining a payload of the first channel characteristic information corresponding to each layer.

As an optional implementation, the payload information includes at least one of the following:

a payload length;

an identifier of a first data set, where the first data set is used for training at least one first AI unit, payload lengths of output information of different first AI units are different, and the at least one first AI unit includes the target first AI unit; and

an identifier of the target first AI unit.

In an implementation, the payload length may include a quantity of floating-point numbers or a quantity of bits of output information of a corresponding first AI unit.

In another implementation, the first data set is used for training the at least one first AI unit. when the first data set is used for training one first AI unit, the terminal may determine the first AI unit trained based on the first data set as the target AI unit, the output length of the target AI unit is a payload length of the first channel characteristic information corresponding to the target layer, and the output length of the target AI unit is a length of output information of the target AI unit. when the first data set is used for training at least two first AI units, the terminal may determine the target AI unit in the at least two first AI units according to a preset rule.

For example, the payload information may include the payload length and the identifier of the first data set. In this case, the terminal obtains at least two first AI units trained based on the first data set, and each first AI unit has a respective output length. In this case, the terminal may determine, based on the first information, the payload length of the first channel characteristic information corresponding to the target layer, and select, from the at least two first AI units as the target AI unit, one first AI unit whose output length is equal to or close to the length.

In still another implementation, the payload information may directly indicate the target first AI unit. In this case, the payload length is a payload of output information of the target first AI unit.

In this embodiment of this application, after the payload of the first channel characteristic information of each layer is determined based on the first information, the first AI unit configured to obtain the first channel characteristic information of each layer may be determined based on the payload.

As an optional implementation, that the terminal performs, based on the first information, the first processing on the channel information of the target layer by using the target first AI unit, to obtain the first channel characteristic information corresponding to the target layer includes:

The terminal determines, based on the first information, a target payload corresponding to the target layer;
the terminal obtains a target first AI unit whose output information has a length matching the target payload; and
the terminal determines the first channel characteristic information of the target layer based on the target first AI unit and the channel information of the target layer.

The target payload corresponding to the target layer may be understood as the payload of the first channel characteristic information corresponding to the target layer.

In an implementation, the target first AI unit may be an AI model. In this case, that the terminal determines the first channel characteristic information of the target layer based on the target first AI unit and the channel information of the target layer may be inputting the channel information of the target layer into the AI model, and obtaining the first channel characteristic information, output by the AI model, of the target layer.

Optionally, that the terminal determines the first channel characteristic information of the target layer based on the target first AI unit and the channel information of the target layer includes:

The terminal obtains second channel characteristic information based on the target first AI unit and the channel information of the target layer; and

when the second channel characteristic information is equal to a payload length corresponding to the target layer, the terminal determines that the first channel characteristic information includes the second channel characteristic information; or
when the second channel characteristic information is greater than a payload length corresponding to the target layer, the terminal performs first post-processing on the second channel characteristic information, to obtain the first channel characteristic information matching the payload length corresponding to the target layer; or
when the second channel characteristic information is less than a payload length corresponding to the target layer, the terminal performs second post-processing on the second channel characteristic information, to obtain the first channel characteristic information matching the payload length corresponding to the target layer.

In an implementation, when the output length of the target first AI unit is the same as the payload corresponding to the target layer, the channel information of the target layer may be directly compressed by using the target first AI unit, to obtain the first channel characteristic information matching the payload corresponding to the target layer.

In another implementation, when the output length of the target first AI unit is greater than the payload corresponding to the target layer, after the channel information of the target layer is compressed by using the target first AI unit to obtain the second channel characteristic information, a length of the second channel characteristic information is greater than the payload corresponding to the target layer. In this case, the first post-processing is performed on the second channel characteristic information, to obtain the first channel characteristic information matching the payload corresponding to the target layer.

The first post-processing may be processing that can reduce the payload of the second channel characteristic information. For example, the first post-processing includes at least one of the following:

truncation processing; and
adjusting a quantization rule for the first channel characteristic information.

The adjusting the quantization rule for the first channel characteristic information may be adjusting the quantization rule for the first channel characteristic information to a quantization rule with lower quantization precision, where the first channel characteristic information quantized based on the quantization rule with lower quantization precision has a smaller quantity of bits.

In still another implementation, when the output length of the target first AI unit is less than the payload corresponding to the target layer, after the channel information of the target layer is compressed by using the target first AI unit to obtain the second channel characteristic information, the length of the second channel characteristic information is less than the payload corresponding to the target layer. In this case, the second post-processing is performed on the second channel characteristic information, to obtain the first channel characteristic information matching the payload corresponding to the target layer.

The second post-processing may be processing that can improve the payload of the second channel characteristic information. For example, the second post-processing includes at least one of the following:

zero-filling processing; and
cyclic repetition processing.

In an implementation, the zero-filling processing may be performing zero-filling on the second channel characteristic information, so that the payload of the second channel characteristic information reaches the payload corresponding to the target layer.

In another implementation, the cyclic repetition processing may be repeating some information in the second channel characteristic information, to obtain the first channel characteristic information matching the payload corresponding to the target layer. For example, it is assumed that the second channel characteristic information is 100 bits, and the payload corresponding to the target layer is 150 bits. In this case, the first channel characteristic information may include: the second channel characteristic information+the first 50 bits of the second channel characteristic information.

In this implementation, the length of the second channel characteristic information may be adjusted based on a magnitude relationship between the length of the second channel characteristic information obtained by the target first AI unit and the payload corresponding to the target layer, so that the length of the first channel characteristic information reported by the terminal is consistent with the payload corresponding to the target layer.

As an optional implementation, the method further includes:

The terminal sends second information to a network-side device, where the second information includes the first channel characteristic information corresponding to the at least one layer.

In this implementation, the terminal may uniformly report first channel characteristic information of all layers of one complete channel.

In an optional implementation, the second information further includes the target rank or identification information of the target rank, and the target rank is a rank of the target channel corresponding to the at least one layer.

In this implementation, the target rank selected by the terminal from the network-side device is a quantity of layers included in the target channel. In this way, the network-side device may determine, based on the quantity, a quantity of layers corresponding to the received first channel characteristic information. Optionally, when the terminal uniformly reports the first channel characteristic information of all the layers of one complete channel, the network-side device may determine the first channel characteristic information of each layer based on the target rank.

In this embodiment of this application, the terminal may determine, based on the first information, the payload information of the first channel characteristic information corresponding to each layer, to process channel information of one layer by using the first AI unit matching the payload information, so as to obtain the channel characteristic information matching the payload information. In this way, for different layers, channel characteristic information of different payloads may be reported to the network-side device, so that lengths of channel characteristic information of different layers can be configured more pointedly, and while overheads of reporting the channel characteristic information is reduced, accuracy of channel characteristic information of a layer with higher importance can further be improved pointedly. For example, it is indicated by using the first information that a payload of channel characteristic information of a layer with higher importance, higher strength, or higher concentration is greater than a payload of channel characteristic information of a layer with lower importance, lower strength, or lower concentration, so that the channel characteristic information, reported by the terminal, of the layer with higher importance or higher strength or higher concentration is more accurate than the channel characteristic information, reported by the terminal, of the layer with lower importance or lower strength or lower concentration.

FIG. 5 shows another information processing method according to an embodiment of this application. The information processing method is performed by a network-side device. The network-side device may include the network-side device listed in the embodiment shown in FIG. 1, or another network-side device. This is not specifically limited herein.

As shown in FIG. 5, the information processing method may include the following steps:

Step 501: The network-side device sends first information to a terminal, where the first information indicates payload information of first channel characteristic information corresponding to at least one layer, the first information is used by the terminal to determine a payload of first channel characteristic information corresponding to a target layer, the first channel characteristic information corresponding to the target layer is obtained by performing first processing by a target first AI unit corresponding to the target layer on channel information of the target layer, payload information of the first channel characteristic information corresponding to the target layer matches an output length of the target first AI unit, and the at least one layer includes the target layer.

During implementation, the first information, the first channel characteristic information, the payload information, and the first AI unit respectively have the same meanings as the first information, the first channel characteristic information, the payload information, and the first AI unit in the method embodiment shown in FIG. 3. Details are not described herein again.

In this embodiment of this application, the network-side device configures or indicates the first information to the terminal, so that in a scenario in which the terminal selects a high rank, the terminal reports channel characteristic information of each layer based on a payload configured or indicated by the network-side device. In this way, for different layers, the network-side device may indicate the terminal to report channel characteristic information with different payloads, and can further configure or indicate lengths of channel characteristic information of different layers more pointedly, and while overheads of reporting the channel characteristic information is reduced, accuracy of channel characteristic information of a layer with higher importance, higher strength, or higher concentration can further be improved pointedly. For example, it is configured or indicated by using the first information that a payload of channel characteristic information of a layer with higher importance, higher strength, or higher concentration is greater than a payload of channel characteristic information of a layer with lower importance, lower strength, or lower concentration, so that the channel characteristic information, reported by the terminal, of the layer with higher importance or higher strength or higher concentration is more accurate than the channel characteristic information, reported by the terminal, of the layer with lower importance or lower strength or lower concentration. In the channel information recovered by the network-side device based on a second AI unit, the channel information of the layer with higher importance or higher strength or higher concentration is also more accurate than the channel information of the layer with lower importance or lower strength or lower concentration.

As an optional implementation, the first information includes at least one of the following:

the payload information in a one-to-one correspondence with the at least one layer;
total payload information in a one-to-one correspondence with candidate ranks;
total payload information, where the total payload information is a sum of payloads of the first channel characteristic information corresponding to the at least one layer; and
a first relationship, where the first relationship includes a relationship between a payload of a first layer and a payload of a second layer, and the at least one layer includes the first layer and the second layer.

As an optional implementation, the payload information includes at least one of the following:

a payload length;
an identifier of a first data set, where the first data set is used for training at least one first AI unit, payload lengths of output information of different first AI units are different, and the at least one first AI unit includes the target first AI unit; and
an identifier of the target first AI unit.

As an optional implementation, the payload length includes at least one of the following:

a quantity of floating-point numbers; and
a quantity of bits.

As an optional implementation, the method further includes:
The network-side device receives second information from the terminal, where the second information includes the first channel characteristic information corresponding to the at least one layer.

The method further includes:
The network-side device performs, based on a second AI unit, second processing on the first channel characteristic information corresponding to the at least one layer, to obtain channel information corresponding to the at least one layer.

In an implementation, the second AI unit is an AI unit corresponding to a decoder, the second processing may include at least one of processing such as decoding, dequantization, and decompression, the second AI unit matches the first AI unit of the terminal, and the second processing may be inverse processing of the first processing corresponding to the first AI unit.

Optionally, the second AI unit is in a one-to-one correspondence with the first AI unit. In this case, the first channel characteristic information obtained based on the target first AI unit may be decoded by using a target second AI unit corresponding to the target first AI unit, to obtain the channel information corresponding to the target layer.

Optionally, input information of the second AI unit may be channel information of an entire channel, for example, first channel characteristic information of all layers corresponding to the target channel.

In an optional implementation, the second information further includes the target rank or identification information of the target rank, and the target rank is a rank of the target channel corresponding to the at least one layer.

In an implementation, the network-side device may determine the first channel characteristic information of each layer based on the target rank. For example, when the network side sets and indicates preset maximum total payload information corresponding to a preset maximum rank, and a protocol agrees on a first relationship, if the terminal determines that a sum of the payloads of the at least one layer is equal to a product of the preset maximum total payload information and a first value, the network-side device may determine, based on the target rank, the first channel characteristic information of each layer by using a principle corresponding to a case that the terminal determines the payloads in a one-to-one correspondence with the at least one layer based on the first relationship and the sum of the payloads of the at least one layer, and then perform the second processing on the first channel characteristic information of each layer by using a corresponding second AI unit, to recover the channel information of each layer.

As an optional implementation, the network-side device performs, based on the second AI unit, the second processing on the first channel characteristic information corresponding to the at least one layer, to obtain the channel information corresponding to the at least one layer includes:

The network-side device obtains, from the second information based on the first information, the first channel characteristic information corresponding to the target layer;
the network-side device determines a second AI unit based on the first information; and
the network-side device determines, based on the second AI unit and the first channel characteristic information corresponding to the target layer, the channel information corresponding to the target layer.

In an implementation, that the network-side device determines the second AI unit based on the first information may be: The network-side device determines that a payload of input information of the second AI unit matches the payload of the first channel characteristic information corresponding to the at least one layer in the first information.

Optionally, a length of the input information of the second AI unit matches the payload information of the first channel characteristic information corresponding to the target layer; or

the identifier of the first data set in the first information indicates a data set configured to train the second AI unit; or
the identifier of the first AI unit in the first information is associated with the second AI unit.

Optionally, when the second AI unit is in a one-to-one correspondence with the first AI unit, a manner in which the network-side device determines the second AI unit based on the first information is similar to a manner in which the terminal determines a first AI unit respectively corresponding to each layer based on the first information, that is, the network-side device determines that the target second AI unit corresponding to the target layer satisfies: An input length of the target second AI unit matches the payload of the first channel characteristic information corresponding to the target layer.

Optionally, when the second AI unit is configured to input first channel characteristic information of all layers of the target channel, that the network-side device determines the second AI unit based on the first information may be: The network-side device determines that an input length of the second AI unit matches a sum of the first channel characteristic information of all the layers of the target channel.

In an implementation, the second AI unit may be an AI model. In this case, that the network-side device determines the channel information corresponding to the target layer based on the second AI unit and the first channel characteristic information corresponding to the target layer may be: The network-side device inputs the first channel characteristic information corresponding to the target layer into the AI model, and obtains the channel information, output by the AI model, corresponding to the target layer.

In this embodiment of this application, the network-side device may configure or indicate the first information to the terminal, so that the terminal compresses the channel information of each layer based on a payload configured or indicated by the network-side device. This has a beneficial effect similar to that in the method embodiment shown in FIG. 4. To avoid repetition, details are not described herein again.

For ease of understanding the information processing method provided in this embodiment of this application, the information processing method provided in this embodiment of this application is described by using an example in which a base station indicates, to the terminal, the preset maximum total payload information corresponding to the preset maximum rank.

The information processing method according to an embodiment of this application may include the following steps.

1. The base station configures a maximum rank as 4.
2. The terminal may perform rank adaptation in a rank 1, a rank 2, a rank 3, and a rank 4.
3. The base station indicates that a maximum payload is 500 bits, and a payload relationship between layers may be indicated by the base station or agreed on by a protocol.

For example, assuming that the first relationship is [0.3 0.3 0.2 0.2], at the rank 4, the terminal calculates that a payload of a layer 0 is 150 bits, a payload of a layer 1 is 150 bits, and a payload of each of a layer 2 and a layer 3 is 100 bits.

Optionally, for the first relationship, the base station may indicate a relationship between a payload corresponding to each rank and the maximum payload. For example, the rank 3 is 80% of the rank 4, the rank 2 is 50% of the rank 4, and the rank 1 is 40% of the rank 4.

4. Assuming that the target rank selected by the terminal is the rank 2, the terminal determines that actual payloads may be: the layer 0 and the layer 1 each have 150 bits, and have a total of 300 bits, or the layer 0 and the layer 1 each have 250 bits, and have a total of 500 bits.

5. The terminal uses a first AI unit whose output length is 150 bits or 250 bits to compress channel information of the layer 0 and the layer 1, to obtain two pieces of first channel characteristic information of 150 bits or 250 bits.

An execution body of the information processing method according to an embodiment of the disclosure may be an information processing apparatus. In this embodiment of this application, the information processing apparatus according to an embodiment of this application is described with the information processing apparatus executing the information processing method as an example.

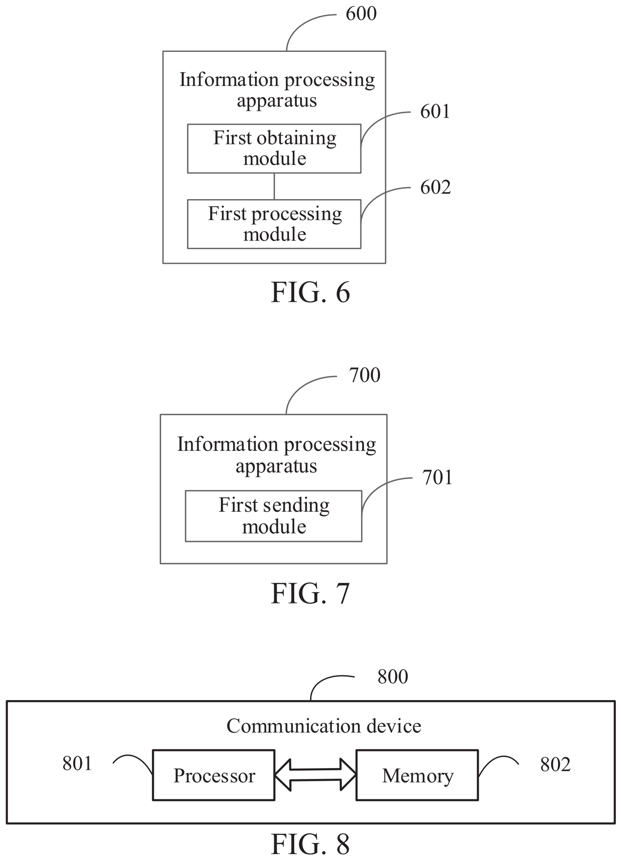

Refer to FIG. 6. An information processing apparatus 600 according to an embodiment of this application may be an apparatus in the terminal. As shown in FIG. 6, the information processing apparatus 600 may include the following modules:

a first obtaining module 601, configured to obtain first information, where the first information indicates payload information of first channel characteristic information corresponding to at least one layer; and
a first processing module 602, configured to perform, based on the first information, first processing on channel information of a target layer by using a target first AI unit, to obtain the first channel characteristic information corresponding to the target layer, where the payload information of the first channel characteristic information corresponding to the target layer matches an output length of the target first AI unit, and the at least one layer includes the target layer.

Optionally, the first information includes at least one of the following:

the payload information in a one-to-one correspondence with the at least one layer;
total payload information in a one-to-one correspondence with candidate ranks;
total payload information, where the total payload information is a sum of payloads of the first channel characteristic information corresponding to the at least one layer;
a first relationship, where the first relationship includes a relationship between a payload of a first layer and a payload of a second layer, and the at least one layer includes the first layer and the second layer; and
preset maximum total payload information corresponding to a preset maximum rank.

Optionally, when the first information includes the first relationship and the total payload information, the information processing apparatus 600 further includes:
a first determining module, configured to determine payloads in a one-to-one correspondence with the at least one layer based on the first relationship and the total payload information.

Optionally, when the first information includes the first relationship and total payload information that is in a one-to-one correspondence with the candidate ranks, the information processing apparatus 600 further includes:

a second determining module, configured to determine, based on the total payload information in a one-to-one correspondence with the candidate ranks, target total payload information corresponding to a target rank, where the target rank is a rank of a target channel corresponding to the at least one layer; and
a third determining module, configured to determine payloads in a one-to-one correspondence with the at least one layer based on the first relationship and the target total payload information.

Optionally, when the first information includes the first relationship and preset maximum total payload information corresponding to a preset maximum rank, the information processing apparatus 600 further includes:

a fourth determining module, configured to determine that a sum of the payloads of the at least one layer is equal to the preset maximum total payload information or is equal to a product of the preset maximum total payload information and a first value, where the first value is a ratio of a target rank to the preset maximum rank, and the target rank is a rank of a target channel corresponding to the at least one layer; and
a fifth determining module, configured to determine the payloads in a one-to-one correspondence with the at least one layer based on the first relationship and the sum of the payloads of the at least one layer.

Optionally, the payload information includes at least one of the following:

a payload length;
an identifier of a first data set, where the first data set is used for training at least one first AI unit, payload lengths of output information of different first AI units are different, and the at least one first AI unit includes the target first AI unit; and
an identifier of the target first AI unit.

Optionally, the payload length includes at least one of the following:

> a quantity of floating-point numbers; and
> a quantity of bits.

Optionally, the first processing module 602 includes:

> a first determining unit, configured to determine, based on the first information, a target payload corresponding to the target layer;
> a first obtaining unit, configured to obtain a target first AI unit whose output information has a length matching the target payload; and
> a second determining unit, configured to determine the first channel characteristic information of the target layer based on the target first AI unit and the channel information of the target layer.

Optionally, the second determining unit includes:

> a first determining subunit, configured to obtain second channel characteristic information based on the target first AI unit and the channel information of the target layer; and
> a second determining subunit, configured to determine, when the second channel characteristic information is equal to a payload length corresponding to the target layer, that the first channel characteristic information includes the second channel characteristic information; or
> a first processing subunit, configured to perform, when the second channel characteristic information is greater than a payload length corresponding to the target layer, first post-processing on the second channel characteristic information, to obtain the first channel characteristic information matching the payload length corresponding to the target layer; or
> a second processing subunit, configured to perform, when the second channel characteristic information is less than a payload length corresponding to the target layer, second post-processing on the second channel characteristic information, to obtain the first channel characteristic information matching the payload length corresponding to the target layer.

Optionally, the first post-processing includes at least one of the following:

> truncation processing; and
> adjusting a quantization rule for the first channel characteristic information.

Optionally, the second post-processing includes at least one of the following:

zero-filling processing; and
cyclic repetition processing.

Optionally, the information processing apparatus 600 further includes:
a first sending module, configured to send second information to a network-side device, where the second information includes the first channel characteristic information corresponding to the at least one layer.

Optionally, the second information further includes the target rank or identification information of the target rank, and the target rank is a rank of the target channel corresponding to the at least one layer.

The information processing apparatus 600 in this embodiment of this application may be an electronic device, for example, an electronic device with an operating system, or may be a component in an electronic device, for example, an integrated circuit or chip. The electronic device may be a terminal. For example, the terminal may include, but is not limited to, the type of the terminal 11 listed above. This is not specifically limited in embodiments of this application.

The information processing apparatus 600 in this embodiment of this application can implement various processes implemented by the method embodiment of FIG. 4, and achieve the same technical effect. To avoid repetition, details are not described herein again.

Refer to FIG. 7. Another information processing apparatus according to an embodiment of this application may be an apparatus in a network-side device. As shown in FIG. 7, an information processing apparatus 700 may include the following modules:
a first sending module 701, configured to send first information to a terminal, where the first information indicates payload information of first channel characteristic information corresponding to at least one layer.

The first information is used by the terminal to determine a payload of first channel characteristic information corresponding to a target layer, the first channel characteristic information corresponding to the target layer is obtained by performing first processing by a target first AI unit corresponding to the target layer on channel information of the target layer, payload information of the first channel characteristic information corresponding to the target layer matches an output length of the target first AI unit, and the at least one layer includes the target layer.

Optionally, the first information includes at least one of the following:

> the payload information in a one-to-one correspondence with the at least one layer;
> total payload information in a one-to-one correspondence with candidate ranks;
> total payload information, where the total payload information is a sum of payloads of the first channel characteristic information corresponding to the at least one layer;

a first relationship, where the first relationship includes a relationship between a payload of a first layer and a payload of a second layer, and the at least one layer includes the first layer and the second layer.

Optionally, the payload information includes at least one of the following:

a payload length;
an identifier of a first data set, where the first data set is used for training at least one first AI unit, payload lengths of output information of different first AI units are different, and the at least one first AI unit includes the target first AI unit; and
an identifier of the target first AI unit.

Optionally, the payload length includes at least one of the following:

a quantity of floating-point numbers; and
a quantity of bits.

Optionally, the information processing apparatus 700 further includes:
a receiving module, configured to receive second information from the terminal, where the second information includes the first channel characteristic information corresponding to the at least one layer.
The information processing apparatus 700 further includes:
a second processing module, configured to perform, based on a second AI unit, second processing on the first channel characteristic information corresponding to the at least one layer, to obtain channel information corresponding to the at least one layer.
Optionally, the second information further includes the target rank or identification information of the target rank, and the target rank is a rank of the target channel corresponding to the at least one layer.
Optionally, the second processing module includes:

an obtaining unit, configured to obtain, from the second information based on the first information, the first channel characteristic information corresponding to the target layer;
a third determining unit, configured to determine a second AI unit based on the first information; and
a fourth determining unit, configured to determine, based on the second AI unit and the first channel characteristic information corresponding to the target layer, the channel information corresponding to the target layer.

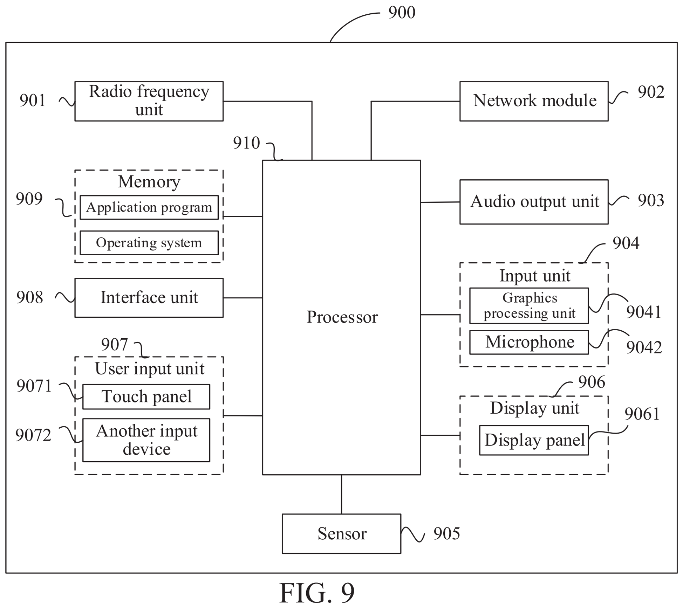

The information processing apparatus 700 in this embodiment of this application can implement various processes implemented by the method embodiment of FIG. 5, and achieve the same technical effect. To avoid repetition, details are not described herein again.
As shown in FIG. 8, an embodiment of this application further provides a communication device 800, including a processor 801 and a memory 802. The memory 802 stores a program or instructions runnable on the processor 801. For example, when the communication device 800 is a terminal, and when the program or instructions are executed by the processor 801, the steps in the embodiment of the information processing method shown in FIG. 4 are implemented, and the same technical effect is achieved. When the communication device 800 is a network-side device, and when the program or instructions are executed by the processor 801, the steps in the embodiment of the information processing method shown in FIG. 5 are implemented, and the same technical effect is achieved. To avoid repetition, details are not described herein again.
An embodiment of this application further provides a terminal, including a processor and a communication interface. The communication interface is coupled to the processor, and the processor is configured to run a program or instructions, to implement the steps in the method embodiment in FIG. 4. This terminal embodiment corresponds to the foregoing terminal-side method embodiment, and each implementation process and implementation of the foregoing method embodiment can be applied to the terminal embodiment, and can achieve the same technical effects. Specifically, FIG. 9 is a schematic diagram of a hardware structure of a terminal according to an embodiment of this application.
A terminal 900 includes, but is not limited to, at least some components such as a radio frequency unit 901, a network module 902, an audio output unit 903, an input unit 904, a sensor 905, a display unit 906, a user input unit 907, an interface unit 908, a memory 909, and a processor 910.
A person skilled in the art may understand that the terminal 900 may further include a power supply (for example, a battery) for supplying power to the components. The power supply may be logically connected to the processor 910 through a power management system, thereby implementing functions such as charging, discharging, and power consumption management through the power management system. A terminal structure shown in FIG. 9 does not constitute a limitation to the terminal, and the terminal may include more or fewer components than those shown in the figure, or some components may be combined, or a different component deployment may be used. Details are not repeated herein.
It should be understood that, in this embodiment of this application, the input unit 904 may include a graphics processing unit (Graphics Processing Unit, GPU) 9041 and a microphone 9042. The graphics processing unit 9041 performs processing on image data of a static picture or a video that is obtained by an image capturing apparatus (for example, a camera) in a video capturing mode or an image capturing mode. The display unit 906 may include a display panel 9061. The display panel 9061 may be configured by using a liquid crystal display, an organic light-emitting diode, or the like. The user input unit 907 includes at least one of a touch panel 9071 and another input device 9072. The touch panel 9071 is also referred to as a touchscreen. The touch panel 9071 may include two parts: a touch detection apparatus and a touch controller. The another input device 9072 may include, but is not limited to, a physical keyboard, a functional key (for example, a volume control key or a switch key), a track ball, a mouse, and a joystick. Details are not described herein.

In this embodiment of this application, the radio frequency unit 901 receives downlink data from a network-side device and then transmits the data to the processor 910 for processing. In addition, the radio frequency unit 901 may send uplink data to the network-side device. Generally, the radio frequency unit 901 includes, but is not limited to, an antenna, an amplifier, a transceiver, a coupler, a low noise amplifier, a duplexer, and the like.

The memory 909 may be configured to store a software program or instructions and various data. The memory 909 may mainly include a first storage area storing a program or instructions and a second storage area storing data. The first storage area may store an operating system, an application program or instructions required by at least one function (for example, a sound playback function and an image display function), and the like. Moreover, the memory 909 may include a volatile memory or a non-volatile memory. The non-volatile memory may be a read-only memory (Read-Only Memory, ROM), a programmable ROM (Programmable ROM, PROM), an erasable PROM (Erasable PROM, EPROM), an electrically EPROM (Electrically EPROM, EEPROM), or a flash memory. The volatile memory may be a random access memory (Random Access Memory, RAM), a static random access memory (static RAM, SRAM), a dynamic random access memory (dynamic RAM, DRAM), a synchronous dynamic random access memory (Synchronous DRAM, SDRAM), a double data rate synchronous dynamic random access memory (Double Data Rate SDRAM, DDR SDRAM), an enhanced synchronous dynamic random access memory (Enhanced SDRAM, ESDRAM), a synchlink dynamic random access memory (Synchlink DRAM, SLDRAM), or a direct rambus random access memory (Direct Rambus RAM, DR RAM). The memory 909 in this embodiment of this application includes but is not limited to these memories and any other memory of a suitable type.

The processor 910 may include one or more processing units. Optionally, the processor 910 integrates an application processor and a modem processor. The application processor mainly processes operations involving an operating system, a user interface, an application, and the like. The modem processor mainly processes a wireless communication signal, and is, for example, a baseband processor. It may be understood that the foregoing modem processor may not be integrated into the processor 910.

The radio frequency unit 901 is configured to obtain first information, where the first information indicates payload information of first channel characteristic information corresponding to at least one layer; and
The processor 910 is configured to perform, based on the first information, first processing on channel information of a target layer by using a target first AI unit, to obtain the first channel characteristic information corresponding to the target layer, where the payload information of the first channel characteristic information corresponding to the target layer matches an output length of the target first AI unit, and the at least one layer includes the target layer.

Optionally, the first information includes at least one of the following:

the payload information in a one-to-one correspondence with the at least one layer;
total payload information in a one-to-one correspondence with candidate ranks;
total payload information, where the total payload information is a sum of payloads of the first channel characteristic information corresponding to the at least one layer;
a first relationship, where the first relationship includes a relationship between a payload of a first layer and a payload of a second layer, and the at least one layer includes the first layer and the second layer; and
preset maximum total payload information corresponding to a preset maximum rank.

Optionally, when the first information includes the first relationship and the total payload information, the processor 910 is further configured to determine payloads in a one-to-one correspondence with the at least one layer based on the first relationship and the total payload information.

Optionally, when the first information includes the first relationship and total payload information that is in a one-to-one correspondence with the candidate ranks, the processor 910 is further configured to:

determine, based on the total payload information in a one-to-one correspondence with the candidate ranks, target total payload information corresponding to a target rank, where the target rank is a rank of a target channel corresponding to the at least one layer; and
determine payloads in a one-to-one correspondence with the at least one layer based on the first relationship and the target total payload information.

Optionally, when the first information includes the first relationship and preset maximum total payload information corresponding to a preset maximum rank, the processor 910 is further configured to:

determine that a sum of the payloads of the at least one layer is equal to the preset maximum total payload information or is equal to a product of the preset maximum total payload information and a first value, where the first value is a ratio of a target rank to the preset maximum rank, and the target rank is a rank of a target channel corresponding to the at least one layer; and

determine the payloads in a one-to-one correspondence with the at least one layer based on the first relationship and the sum of the payloads of the at least one layer.

Optionally, the payload information includes at least one of the following:

a payload length;
an identifier of a first data set, where the first data set is used for training at least one first AI unit, payload lengths of output information of different first AI units are different, and the at least one first AI unit includes the target first AI unit; and
an identifier of the target first AI unit.

Optionally, the payload length includes at least one of the following:

a quantity of floating-point numbers; and
a quantity of bits.

Optionally, that the processor 910 performs, based on the first information, the first processing on the channel information of the target layer by using the target first AI unit, to obtain the first channel characteristic information corresponding to the target layer includes:

determining, based on the first information, a target payload corresponding to the target layer;
obtaining a target first AI unit whose output information has a length matching the target payload; and
determining the first channel characteristic information of the target layer based on the target first AI unit and the channel information of the target layer.

Optionally, that the processor 910 determines the first channel characteristic information of the target layer based on the target first AI unit and the channel information of the target layer includes:

obtaining second channel characteristic information based on the target first AI unit and the channel information of the target layer; and
when the second channel characteristic information is equal to a payload length corresponding to the target layer, determining that the first channel characteristic information includes the second channel characteristic information; or
when the second channel characteristic information is greater than a payload length corresponding to the target layer, performing first post-processing on the second channel characteristic information, to obtain the first channel characteristic information matching the payload length corresponding to the target layer; or
when the second channel characteristic information is less than a payload length corresponding to the target layer, performing second post-processing on the second channel characteristic information, to obtain the first channel characteristic information matching the payload length corresponding to the target layer.

Optionally, the first post-processing includes at least one of the following:

truncation processing; and
adjusting a quantization rule for the first channel characteristic information.

Optionally, the second post-processing includes at least one of the following:

zero-filling processing; and
cyclic repetition processing.

Optionally, the radio frequency unit 901 is further configured to send second information to a network-side device, where the second information includes the first channel characteristic information corresponding to the at least one layer.

Optionally, the second information further includes the target rank or identification information of the target rank, and the target rank is a rank of the target channel corresponding to the at least one layer.

It may be understood that, for the implementation processes of the implementations in this embodiment, refer to the descriptions of the embodiment of the information processing method shown in FIG. 4. The same or corresponding technical effect is achieved. To avoid repetition, details are not described herein again.

An embodiment of this application further provides a network-side device, including a processor and a communication interface. The communication interface is coupled to the processor, and the processor is configured to run a program or instructions, to implement the steps in the method embodiment in FIG. 5. This network-side device embodiment corresponds to the foregoing network-side device method embodiment. Each implementation process and implementation of the foregoing method embodiment can be applied to this network-side device embodiment, and can achieve the same technical effect.

Specifically, an embodiment of this application further provides a network-side device. As shown in FIG.

10, a network-side device 1000 includes: an antenna 1001, a radio frequency apparatus 1002, a baseband apparatus 1003, a processor 1004, and a memory 1005. The antenna 1001 is connected to the radio frequency apparatus 1002. In an uplink direction, the radio frequency apparatus 1002 receives information through the antenna 1001, and sends the received information to the baseband apparatus 1003 for processing. In a downlink direction, the baseband apparatus 1003 processes to-be-sent information, and sends the processed to-be-sent information to the radio frequency apparatus 1002. The radio frequency apparatus 1002 processes the received information, and then sends the processed information through the antenna 1001.

The method performed by the network-side device in the foregoing embodiment may be implemented by the baseband apparatus 1003. The baseband apparatus 1003 includes a baseband processor.

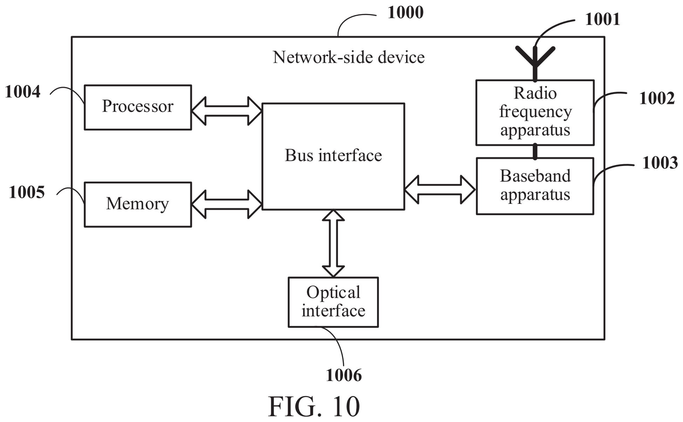

The baseband apparatus 1003 may include, for example, at least one baseband board. A plurality of chips are disposed on the baseband board. As shown in FIG. 10, one chip is, for example, the baseband processor, and is connected to the memory 1005 through a bus interface, to invoke a program in the memory 1005, to perform the network device operations shown in the foregoing method embodiments.

The network-side device may further include a network interface 1006. The interface is, for example, a common public radio interface (common public radio interface, CPRI).

Specifically, the network-side device 1000 in this embodiment of this invention further includes: instructions or a program stored in the memory 1005 and runnable on the processor 1004. The processor 1004 invokes the instructions or program in the memory 1005 to perform the method performed by each module shown in FIG. 7, and achieves the same technical effect. To avoid repetition, details are not described herein again.

An embodiment of this application further provides a readable storage medium. The readable storage medium stores a program or instructions. When the program or instructions are executed by a processor, the processes in the method embodiment shown in FIG. 4 or FIG. 5 are implemented, and the same technical effect is achieved. To avoid repetition, details are not described herein again.

The processor is a processor in the terminal described in the foregoing embodiments. The readable storage medium includes a computer-readable storage medium, for example, a computer read-only memory ROM, a random access memory RAM, a magnetic disk, or an optical disk. In some examples, the readable storage medium may be a non-transitory readable storage medium.

An embodiment of this application further provides a chip. The chip includes a processor and a communication interface. The communication interface is coupled to the processor, and the processor is configured to run a program or instructions, to implement the processes in the method embodiment shown in FIG. 4 or FIG. 5, and achieve the same technical effect. To avoid repetition, details are not described herein again.

It should be understood that the chip mentioned in this embodiment of this application may also be referred to as a system level chip, a system chip, a chip system, a system on chip, or the like.

An embodiment of this application further provides a computer program/program product. The computer program/program product is stored in a storage medium, and the computer program/program product is executed by at least one processor, to implement the processes in the method embodiment shown in FIG. 4 or FIG. 5, and achieve the same technical effect. To avoid repetition, details are not described herein again.

An embodiment of this application further provides a communication system, including a terminal and a network-side device. The terminal may be configured to perform steps of the information processing method shown in FIG. 4, and the network-side device may be configured to perform steps of the information processing method shown in FIG. 5.

It should be noted that in this specification, the term "include", "contain", or any other variants thereof are intended to encompass in a non-exclusive mode, so that a process, a method, an object, or an apparatus including a series of elements not only includes those elements, but also includes other elements that are not explicitly listed, or elements that are inherent to such a process, a method, an object, or an apparatus. Without more limitations, an element defined by a sentence "including one......" does not exclude existence of other same elements in the process, the method, the object, or the apparatus that includes the element. In addition, it should be noted that a scope of the method and the apparatus in embodiments of this application is not limited to performing functions according to a sequence that is shown or discussed, but may further include performing functions in a substantially simultaneous manner or in a reversed sequence according to the functions involved. For example, the described method may be performed in a different order than a described order, and various steps may be added, omitted, or combined. In addition, features described with reference to some examples may be combined in other examples.

Through the descriptions of the foregoing embodiments, a person skilled in the art may clearly understand that the methods according to the foregoing embodiments may be implemented by software and a necessary general hardware platform, and certainly, may alternatively be implemented by hardware, but in many cases, the former manner is a better implementation. The computer software product is stored in a storage medium (for example, a ROM/RAM, a magnetic disk, or an optical disc) and includes several instructions for instructing a terminal or a network-side device to perform the methods described in embodiments of this application.

The embodiments of this application are described above with reference to the accompanying drawings. However, this application is not limited to the specific implementations described above, and the specific implementations described above are only exemplary and not limitative. A person of ordinary skill in the art may make various forms of implementations under the revelation of this application without departing from the spirit of this application and the protection scope of the claims, and such implementations shall all fall within the protection scope of this application.

## Claims

1. An information processing method, comprising:

   obtaining, by a terminal, first information, wherein the first information indicates payload information of first channel characteristic information corresponding to at least one layer; and
   performing, by the terminal based on the first information, first processing on channel information of a target layer by using a target first AI unit, to obtain the first channel characteristic information corresponding to the target layer, wherein payload information of the first channel characteristic information corresponding to the target layer matches an output length of the target first AI unit, and the at least one layer comprises the target layer.

2. The method according to claim 1, wherein the first information comprises at least one of the following:

   the payload information in a one-to-one correspondence with the at least one layer;
   total payload information in a one-to-one correspondence with candidate ranks;
   total payload information, wherein the total payload information is a sum of payloads of the first channel characteristic information corresponding to the at least one layer;
   a first relationship, wherein the first relationship comprises a relationship between a payload of a first layer and a payload of a second layer, and the at least one layer comprises the first layer and the second layer; and
   preset maximum total payload information corresponding to a preset maximum rank.

3. The method according to claim 2, wherein when the first information comprises the first relationship and the total payload information, the method further comprises:
   determining, by the terminal, payloads in a one-to-one correspondence with the at least one layer based on the first relationship and the total payload information.

4. The method according to claim 2, wherein when the first information comprises the first relationship and the total payload information in a one-to-one correspondence with the candidate ranks, the method further comprises:

   determining, by the terminal based on the total payload information in a one-to-one correspondence with the candidate ranks, target total payload information corresponding to a target rank, wherein the target rank is a rank of a target channel corresponding to the at least one layer; and
   determining, by the terminal, payloads in a one-to-one correspondence with the at least one layer based on the first relationship and the target total payload information.

5. The method according to claim 2, wherein when the first information comprises the first relationship and the preset maximum total payload information corresponding to the preset maximum rank, the method further comprises:

   determining, by the terminal, that a sum of the payloads of the at least one layer is equal to the preset maximum total payload information or is equal to a product of the preset maximum total payload information and a first value, wherein the first value is a ratio of a target rank to the preset maximum rank, and the target rank is a rank of a target channel corresponding to the at least one layer; and
   determining, by the terminal, the payloads in a one-to-one correspondence with the at least one layer based on the first relationship and the sum of the payloads of the at least one layer.

6. The method according to any one of claims 1 to 5, wherein the payload information comprises at least one of the following:

   a payload length;
   an identifier of a first data set, wherein the first data set is used for training at least one first AI unit, payload lengths of output information of different first AI units are different, and the at least one first AI unit comprises the target first AI unit; and
   an identifier of the target first AI unit.

7. The method according to claim 6, wherein the payload length comprises at least one of the following:

   a quantity of floating-point numbers; and

a quantity of bits.

8. The method according to any one of claims 1 to 7, wherein the performing, by the terminal based on the first information, the first processing on the channel information of the target layer by using the target first AI unit, to obtain the first channel characteristic information corresponding to the target layer comprises:

   determining, by the terminal based on the first information, a target payload corresponding to the target layer;
   obtaining, by the terminal, a target first AI unit whose output information has a length matching the target payload; and
   determining, by the terminal, the first channel characteristic information of the target layer based on the target first AI unit and the channel information of the target layer.

9. The method according to claim 8, wherein the determining, by the terminal, the first channel characteristic information of the target layer based on the target first AI unit and the channel information of the target layer comprises:

   obtaining, by the terminal, second channel characteristic information based on the target first AI unit and the channel information of the target layer; and
   when the second channel characteristic information is equal to a payload length corresponding to the target layer, determining, by the terminal, that the first channel characteristic information comprises the second channel characteristic information; or
   when the second channel characteristic information is greater than a payload length corresponding to the target layer, performing, by the terminal, first post-processing on the second channel characteristic information, to obtain the first channel characteristic information matching the payload length corresponding to the target layer; or
   when the second channel characteristic information is less than a payload length corresponding to the target layer, performing, by the terminal, second post-processing on the second channel characteristic information, to obtain the first channel characteristic information matching the payload length corresponding to the target layer.

10. The method according to claim 9, wherein the first post-processing comprises at least one of the following:

truncation processing; and
adjusting a quantization rule for the first channel characteristic information.

11. The method according to claim 9, wherein the second post-processing comprises at least one of the following:

   zero-filling processing; and
   cyclic repetition processing.

12. The method according to any one of claims 1 to 11, wherein the method further comprises:
   sending, by the terminal, second information to a network-side device, wherein the second information comprises the first channel characteristic information corresponding to the at least one layer.

13. The method according to claim 12, wherein the second information further comprises the target rank or identification information of the target rank, and the target rank is a rank of the target channel corresponding to the at least one layer.

14. An information transmission method, wherein the method comprises:

   sending, by a network-side device, first information to a terminal, wherein the first information indicates payload information of first channel characteristic information corresponding to at least one layer, wherein
   the first information is used by the terminal to determine a payload of first channel characteristic information corresponding to a target layer, the first channel characteristic information corresponding to the target layer is obtained by performing first processing by a target first AI unit corresponding to the target layer on channel information of the target layer, payload information of the first channel characteristic information corresponding to the target layer matches an output length of the target first AI unit, and the at least one layer comprises the target layer.

15. The method according to claim 14, wherein the first information comprises at least one of the following:

   the payload information in a one-to-one correspondence with the at least one layer;
   total payload information in a one-to-one correspondence with candidate ranks;
   total payload information, wherein the total payload information is a sum of payloads of the first channel characteristic information corresponding to the at least one layer; and
   a first relationship, wherein the first relationship comprises a relationship between a payload of a first layer and a payload of a second layer, and the at least one layer comprises the first layer and the second layer.

16. The method according to claim 14 or 15, wherein the payload information comprises at least one of the following:

a payload length;
an identifier of a first data set, wherein the first data set is used for training at least one first AI unit, payload lengths of output information of different first AI units are different, and the at least one first AI unit comprises the target first AI unit; and
an identifier of the target first AI unit.

17. The method according to claim 16, wherein the payload length comprises at least one of the following:

a quantity of floating-point numbers; and
a quantity of bits.

18. The method according to any one of claims 14 to 17, wherein the method further comprises:

receiving, by the network-side device, second information from the terminal, wherein the second information comprises the first channel characteristic information corresponding to the at least one layer; and
the method further comprises:
performing, by the network-side device based on a second AI unit, second processing on the first channel characteristic information corresponding to the at least one layer, to obtain channel information corresponding to the at least one layer.

19. The method according to claim 18, wherein the second information further comprises a target rank or identification information of the target rank, and the target rank is a rank of a target channel corresponding to the at least one layer.

20. The method according to claim 18 or 19, wherein the performing, by the network-side device based on the second AI unit, the second processing on the first channel characteristic information corresponding to the at least one layer, to obtain the channel information corresponding to the at least one layer comprises:

obtaining, by the network-side device from the second information based on the first information, the first channel characteristic information corresponding to the target layer;
determining, by the network-side device, the second AI unit based on the first information; and
determining, by the network-side device based on the second AI unit and the first channel characteristic information corresponding to the target layer, the channel information corresponding to the target layer.

21. An information processing apparatus, comprising:

a first obtaining module, configured to obtain first information, wherein the first information indicates payload information of first channel characteristic information corresponding to at least one layer; and
a first processing module, configured to perform, based on the first information, first processing on channel information of a target layer by using a target first AI unit, to obtain the first channel characteristic information corresponding to the target layer, wherein the payload information of the first channel characteristic information corresponding to the target layer matches an output length of the target first AI unit, and the at least one layer comprises the target layer.

22. An information processing apparatus, comprising:

a first sending module, configured to send first information to a terminal, wherein the first information indicates payload information of first channel characteristic information corresponding to at least one layer, wherein
the first information is used by the terminal to determine a payload of first channel characteristic information corresponding to a target layer, the first channel characteristic information corresponding to the target layer is obtained by performing first processing by a target first AI unit corresponding to the target layer on channel information of the target layer, payload information of the first channel characteristic information corresponding to the target layer matches an output length of the target first AI unit, and the at least one layer comprises the target layer.

23. A terminal, comprising a processor and a memory, wherein the memory stores a program or instructions runnable on the processor, and when the program or the instructions are executed by the processor, the steps of the information processing method according to any one of claims 1 to 13 are implemented.

24. A network-side device, comprising a processor and a memory, wherein the memory stores a program or instructions runnable on the processor, and when the program or the instructions are executed by the processor, the steps of the information transmission method according to any one of claims 14 to 20 are implemented.

25. A readable storage medium, wherein the readable storage medium stores a program or instructions, and when the program or the instructions are executed by a processor, the steps of the information processing method according to any one of claims 1 to 13 are implemented, or the steps of the information transmission method according to any one of claims 14 to 20 are implemented.

FIG. 1

FIG. 2

$$a_1 \quad w_1$$
$$\vdots \quad \vdots$$
$$a_k \quad w_k \quad + \xrightarrow{z} \sigma(z) \longrightarrow a$$
$$\vdots \quad \vdots$$
$$w_K \qquad \text{Activation function}$$
$$a_K \quad \text{Weight} \qquad b \qquad \text{Bias}$$

FIG. 3

| A terminal obtains first information, where the first information indicates payload information of first channel characteristic information corresponding to at least one layer (layer) | 401 |

| The terminal performs, based on the first information, first processing on channel information of a target layer (layer) by using a target first AI unit, to obtain the first channel characteristic information corresponding to the target layer (layer), where payload information of the first channel characteristic information corresponding to the target layer (layer) matches an output length of the target first AI unit | 402 |

FIG. 4

| A network-side device sends first information to a terminal, where the first information indicates payload information of first channel characteristic information corresponding to at least one layer (layer) | 501 |

FIG. 5

FIG. 6

FIG. 7

FIG. 8

FIG. 9

**1000**

**1001**

Network-side device

**1004** Processor

Bus interface

Radio frequency apparatus **1002**

Baseband apparatus **1003**

**1005** Memory

Optical interface

**1006**

FIG. 10

## INTERNATIONAL SEARCH REPORT

| International application No. |
|---|
| **PCT/CN2024/088746** |

| A. | CLASSIFICATION OF SUBJECT MATTER |
|---|---|

H04W72/04(2023.01)i;  H04L1/00(2006.01)i

According to International Patent Classification (IPC) or to both national classification and IPC

| B. | FIELDS SEARCHED |
|---|---|

Minimum documentation searched (classification system followed by classification symbols)

IPC:H04

Documentation searched other than minimum documentation to the extent that such documents are included in the fields searched

Electronic data base consulted during the international search (name of data base and, where practicable, search terms used)

3GPP, CNTXT, ENTXTC, VEN: 编码, 人工智能, AI, 模型, 层, 长度, 负载, 载荷, 大小, 信道, 信道特征, 压缩, 预编码, 预编码矩阵, encode, AI, artificial intelligence, model, layer, length, payload, size, CSI, precoding, maxtrix

| C. | DOCUMENTS CONSIDERED TO BE RELEVANT |
|---|---|

| Category* | Citation of document, with indication, where appropriate, of the relevant passages | Relevant to claim No. |
|---|---|---|
| X | Apple. "R1-2303476 Discussion on other aspects of AI/ML for CSI enhancement" *3GPP tsg_ran\wg1_rl1*, No. tsgr1_112b-e, 08 April 2023 (2023-04-08), sections 1-2 | 1, 6, 12-14, 16, 18-25 |
| Y | Apple. "R1-2303476 Discussion on other aspects of AI/ML for CSI enhancement" *3GPP tsg_ran\wg1_rl1*, No. tsgr1_112b-e, 08 April 2023 (2023-04-08), sections 1-2 | 2-5, 7-11, 15, 17 |
| Y | CATT. "R1-2302695 "Evaluation on AI/ML-based CSI feedback enhancement"" *3GPP tsg_ran\wg1_rl1*, No. tsgr1_112b-e, 08 April 2023 (2023-04-08), sections 1-3 | 2-5, 7-11, 15, 17 |
| A | US 2022006496 A1 (LG ELECTRONICS INC.) 06 January 2022 (2022-01-06) entire document | 1-25 |
| A | CN 111183595 A (QUALCOMM INC.) 19 May 2020 (2020-05-19) entire document | 1-25 |

☐ Further documents are listed in the continuation of Box C.  ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **01 August 2024** | **02 August 2024** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT
### Information on patent family members

International application No.

**PCT/CN2024/088746**

| Patent document cited in search report | | | Publication date (day/month/year) | Patent family member(s) | | | Publication date (day/month/year) |
|---|---|---|---|---|---|---|---|
| US | 2022006496 | A1 | 06 January 2022 | WO | 2020091544 | A1 | 07 May 2020 |
| CN | 111183595 | A | 19 May 2020 | WO | 2019068211 | A1 | 11 April 2019 |
| | | | | KR | 20200061349 | A | 02 June 2020 |
| | | | | US | 2020244425 | A1 | 30 July 2020 |
| | | | | US | 11258568 | B2 | 22 February 2022 |
| | | | | CA | 3073846 | A1 | 11 April 2019 |
| | | | | JP | 2020536435 | A | 10 December 2020 |
| | | | | JP | 7421472 | B2 | 24 January 2024 |
| | | | | BR | 112020006353 | A2 | 24 September 2020 |
| | | | | WO | 2019068252 | A1 | 11 April 2019 |
| | | | | EP | 3692647 | A1 | 12 August 2020 |
| | | | | EP | 3692647 | A4 | 09 June 2021 |

Form PCT/ISA/210 (patent family annex) (July 2022)

**EP 4 704 477 A1**

**Patent documents cited in the description**

- CN 202310455140